# EUROPÄISCHE PATENTSCHRIFT

(11) **EP 3 587 795 B1**
(45) Veröffentlichungstag und Bekanntmachung des Hinweises auf die Patenterteilung: **20.01.2021**
(21) Anmeldenummer: 19182357.4
(22) Anmeldetag: 25.06.2019
(51) Int. Cl.: F03C 1/26, F04B 49/00, F16H 61/4192, F04B 1/295, F04B 1/324, F04B 49/08, F04B 49/22, F16H 61/4008, F16H 61/431, F03C 1/40

(54) **HYDROSTATISCHER FAHRANTRIEB MIT DRUCKABSCHNEIDUNG UND VERFAHREN ZUM KALIBRIEREN DER DRUCKABSCHNEIDUNG**
HYDROSTATIC DRIVE WITH PRESSURE CUTTING AND METHOD FOR CALIBRATING THE PRESSURE CUTTING
TRANSMISSION HYDROSTATIQUE À LIMITATION DE PRESSION ET PROCÉDÉ D'ÉTALONNAGE DE LA LIMITATION DE PRESSION

(30) Priorität: 29.06.2018 DE 102018210720
(43) Veröffentlichungstag der Anmeldung: 01.01.2020
(73) Patentinhaber: Robert Bosch GmbH, 70442 Stuttgart (DE)
(72) Erfinder: Werner, Franz, 89129 Langenau (DE); Lenzgeiger, Ulrich, 86424 Dinkelscherben (DE); Frasch, Michael, 89081 Ulm (DE); Herrmann, Ronny, 89233 Neu-Ulm (DE); Mueller, Matthias, 89129 Langenau (DE)

(56) Entgegenhaltungen:
- DE-A1- 3 806 194
- DE-A1- 10 037 195
- DE-A1- 19 742 157
- DE-A1-102013 224 657

## Beschreibung

Die Erfindung betrifft einen hydrostatischen Fahrantrieb mit Druckabschneidung gemäß dem Oberbegriff des Patentanspruchs 1, sowie ein Verfahren zum Kalibrieren der Druckabschneidung gemäß Patentanspruch 9.

Aus der Offenlegungsschrift DE 10 2013 224 657 A1 ist ein hydrostatischer Fahrantrieb bekannt Ein gattungsgemäßer hydrostatischer Fahrantrieb hat eine Hydropumpe und einen von dieser in insbesondere geschlossenem hydraulischem Kreis mit Druckmittel versorgbaren Hydromotor. Gemäß dem Datenblatt RG-E 92003 der Anmelderin ist eine Axialkolben-Verstellpumpe in Schrägscheibenbauweise bekannt, deren Druck, den sie dem hydraulischen Kreis bereitstellt, direkt steuerbar ist. Dabei ist die Hydropumpe physisch derart ausgestaltet, dass der Druck stets einem Stelldruck eines auf das Hubvolumen der Hydropumpe einwirkenden Stellzylinders entgegenwirkt. Die Hydropumpe weist so baubedingt eine interne Regelschleife auf, wodurch der Druck stets in Richtung seiner eigenen Verringerung wirkt. Im Pumpenbetrieb der Hydropumpe ist er dabei in Richtung einer Verringerung und im Motorbetrieb in Richtung einer Vergrößerung des Hubvolumens wirksam. Eine Kammer des Stellzylinders ist dem Zugbetrieb und eine andere, entgegenwirkende Kammer dem Schlepp- oder Bremsbetrieb des Fahrantriebes zugeordnet. Durch Vermessung der Hydropumpe bezüglich ihrer Parameter Druck, Stelldruck, Verdrängungsvolumen und Drehzahl ist ein Kennfeld der Hydropumpe bekannt, aus dem gemäß einem Gaspedal- oder Fahrerwunsch ein notwendiger Stelldruck ermittelbar ist. Dies erfolgt über eine elektronische Steuereinheit. Diese Steuerung der Hydropumpe ermöglicht es, einer Stellung des Gas- oder Fahrpedals direkt ein Antriebsmoment zuzuordnen, was vom Bediener als sehr direkte und daher gut zu kalkulierende Steuerung des Fahrantriebs wahrgenommen wird.

Zur Absicherung der Druck- bzw. Hochdruckführenden Arbeitsleitungen sind Druckbegrenzungsventile vorgesehen, die ab einem eingestellten Grenzwert Druckmittel aus der betreffenden Arbeitsleitung entlassen. Da dies jedoch energetisch nachteilig ist, ist eine sogenannte Druckabschneidung etwa 30bar unterhalb des am Druckbegrenzungsventil eingestellten Drucks vorgesehen. Die Druckabschneidung ist so realisiert, dass ein gesondertes, geringer dimensioniertes Druckbegrenzungsventil vorgesehen ist, das in Öffnungsrichtung mit dem höchsten der Drücke der Arbeitsleitung und in Schließrichtung mit dem Sollwert beaufschlagt ist. Erreicht der Arbeitsdruck den Sollwert oder Abschneidewert, so wird über dieses Druckbegrenzungsventil eine Steuerdruckleitung, in der Steuerdruckmittel bei einem Druck von etwa 30bar bereitgestellt wird, entlastet. Da aus dem bereitgestellten Steuerdruckmittel über Druckreduzierventile ein Stelldruck der jeweiligen Kammer reduziert wird, sinkt auf diese Weise auch der maximal bereitstellbare Stelldruck. Entsprechend schwenkt im Pumpenbetrieb das Verdrängungsvolumen der Hydropumpe aufgrund geringeren Stelldrucks zurück, wodurch durch das geringere Fördervolumen der Hydropumpe der Druck oder Arbeitsdruck limitiert wird. Diese herkömmliche Limitierung oder Druckabschneidung basiert somit auf einem hydromechanischen Regelkreis mit dem genannten Druckbegrenzungsventil als hydromechanischem Regler.

An dieser Lösung nachteilig erweisen sich der vergleichsweise hohe vorrichtungstechnische Aufwand zur Ermittlung des höchsten der Drücke der Arbeitsleitungen, die Bereitstellung des Druckbegrenzungsventils zur Druckabschneidung, sowie der energetische Verlust durch Abblasen des Steuerdruckmittels. Hinzu kommt, dass die genannte Kombination aus elektronisch gesteuert verstellbarer Hydropumpe mit hydromechanisch geregelter Druckabschneidung in Transienten schwer oder nicht beherrschbar sein kann.

Im alternativen Fall einer elektronisch geregelten Druckabschneidung auf Basis von Drucksensoren erfasster Druckwerte erweist sich diese als schwingungsanfällig und komplex. Diese Art der Druckabschneidung erweist sich zudem als niedrig performant, da sie auf Druckspitzen ungewollt reagiert, und somit auch in unkritischen Betriebszuständen einen Eingriff der Druckabschneidung und damit eine Reduzierung des Stelldrucks und des Pumpenvolumens bewirkt. Dies kann Schwingungen verursachen. Fällt zudem beispielsweise die Drucksensorik aus, so fällt auch die Druckabschneidung aus, was spätestens beim Ansprechen einer Druckbegrenzungsfunktion zu einem energetischen Nachteil führt. Generell muss die Drucksensorik somit hohe Anforderungen an Genauigkeit und Robustheit erfüllen, was hohe Kosten verursacht.

Demgegenüber liegt der Erfindung die Aufgabe zugrunde, einen hydrostatischen Fahrantrieb mit einer Druckabschneidung mit stabilerem Verhalten und einfacher Kalibrierung, sowie ein Verfahren zur Kalibrierung dieser Druckabschneidung zu schaffen.

Die erste Aufgabe wird gelöst durch einen hydrostatischen Fahrantrieb mit den Merkmalen des Patentanspruchs 1, die zweite durch ein Verfahren mit den Merkmalen des Patentanspruchs 9.

Vorteilhafte Weiterbildungen des Fahrantriebs sind in den Patentansprüchen 2 bis 8, diejenigen des Verfahrens in den Patentansprüchen 9 bis 15 beschrieben.

Ein hydrostatischer Fahrantrieb hat eine Hydropumpe, die mit einer Antriebsmaschine koppelbar ist. Über die Hydropumpe ist ein mit einem Abtrieb koppelbare Hydromotor des Fahrantriebes mit Druckmittel versorgbar. Die Antriebsmaschine, beispielsweise ein Diesel- oder Elektromotor und / oder der Abtrieb können Bestandteil des Fahrantriebes sein. Die Hydropumpe ist mit verstellbarem Verdrängungs- oder Hubvolumen ausgestaltet, wobei zu dessen Verstellung ein Stellzylinder mit wenigstens einem Zylinderraum vorgesehen ist. Vorzugsweise ist der Stellzylinder, insbesondere dessen Kolben, mit einem Stellelement der Hydropumpe koppelbar oder gekoppelt, von dessen Stellung das Hubvolumen abhängt. Um den wenigstens einen Zylinderraum mit einem aufs Hubvolumen verstellend wirksamen Stelldruck zu beaufschlagen, ist wenigstens ein elektrisch ansteuerbares Druckventil, insbesondere Druckregel- oder Druckreduzierventil, vorgesehen und dem Zylinderraum zugeordnet. Mit dem Ziel einen Druck der Hydropumpe zu limitieren, sodass dieser beispielsweise ein oberes Limit nicht überschreitet, weist der Fahrantrieb eine Einrichtung auf, über die der Stelldruck beeinflussbar ist. In Folge bewirkt die Beeinflussung des Stelldrucks, insbesondere über dessen Einfluss auf das Hubvolumen, die Limitierung des Drucks. Diese Drucklimitierung durch Beeinflussung des Hubvolumens wird im Unterschied zur Druckbegrenzung, bei der der Druck durch Abblasen des Druckmittels über ein sich an einer eingestellten Druckgrenze öffnendes Druckbegrenzungsventil begrenzt wird, als Druckabschneidung bezeichnet. Erfindungsgemäß ist die Einrichtung derart ausgestaltet, dass über sie der Stelldruck - und in Folge der Druck - gesteuert, insbesondere modellbasiert gesteuert, limitierbar ist und über sie diese gesteuerte Limitierung kalibrierbar ist.

Verglichen mit herkömmlichen Lösungen, die auf einer Regelung des Drucks an dessen Limit basieren, und gemäß denen der Druck erfasst oder ermittelt werden muss, und in Folge der Stelldruck so beeinflusst wird, dass das Limit nicht überschritten wird, hat die erfindungsgemäß auf Steuerung basierende Lösung der Druckabschneidung mehrere Vorteile. So weist sie eine geringere Komplexität und stabileres Verhalten auf, da eine Schwingungsanfälligkeit, wie beispielsweise bei geregelter Druckabschneidung auf Basis von Drucksensoren, geringer ist oder sogar entfällt. Eine herkömmliche Lösung, bei der die Einrichtung als hydromechanischer Regler, beispielsweise als mit dem Druck beaufschlagtes Druckbegrenzungsventil ausgestaltet ist, bei dessen Ansprechen ein bereitgestellter Steuerdruck, aus dem der Stelldruck über das Druckventil reduziert wird, absinkt, kann anfällig für nur schwer oder sogar unkontrollierbare Transienten bei Übergängen von dieser hydromechanischen Regelung der Druckabschneidung zur elektronischen Ansteuerung des Druckventils - also zur elektronischen Pumpensteuerung - sein. In diesem Fall kann es zu einem unkontrollierten Erhöhen des Hubvolumens der Hydropumpe kommen. Mit der erfindungsgemäß steuernden Druckabschneidung ist dieses Problem jedoch eliminiert. Zudem kann beispielsweise auf eine Druckerfassung zum Zwecke der Regelung verzichtet werden, wodurch der hydrostatische Fahrantrieb vorrichtungstechnisch weniger aufwändig und kostengünstiger ausgestaltet sein kann. Die Kalibrierung über die so ausgebildete Einrichtung, insbesondere wenn diese so ausgestaltet ist, dass die Kalibrierung automatisiert erfolgen kann, zeigt zudem eine hohe Drucksteuergenauigkeit. Zudem können auf diese Weise Veränderungen der Hydropumpe, die insbesondere über deren Lebensdauer eintreten, mit jeder Kalibrierung neu kompensiert werden.

Da die Kalibrierung somit von der ohnehin vorhandenen Einrichtung der Hydropumpe - also im Prinzip mit Bordmitteln - durchgeführt werden kann, ist die Kalibrierung bei einer Wartung im Feld durchführbar und es muss keine manueller Abgleich oder eine Rückführung ins Werk erfolgen.

In einer Weiterbildung ist die Hydropumpe derart gebaut oder ausgestaltet, dass der Druck dem verstellend wirksamen Stelldruck entgegenwirkt. Der Druck wirkt dabei stets in Richtung seiner eigenen Verringerung, wodurch die Hydropumpe eine interne Regelwirkung aufweist. In einer Weiterbildung ist das Hubvolumen der Hydropumpe über den Stellzylinder beidseitig eines Nullvolumens oder einer Neutralstellung verstellbar.

In einer Weiterbildung ist die Einrichtung derart ausgestaltet, dass über sie das Hubvolumen der Hydropumpe oder eine dem Hubvolumen zugrundeliegende Größe - beispielsweise ein Schwenkwinkel einer Schrägscheibe im Falle der als Axialkolbenmaschine in Schrägscheibenbauweise ausgestalteten Hydropumpe - über eine Bilanzierung des Druckmittelvolumenstroms ermittelbar, insbesondere berechenbar ist.

Ist der Hydromotor mit konstantem Hubvolumen ausgestaltet, so ist das für die Bilanzierung notwendige aktuelle Hubvolumen das Nenn-Hubvolumen und somit stets bekannt. Vorzugsweise ist das Nenn-Hubvolumen in der Einrichtung, insbesondere zum Zwecke der Bilanzierung, abgelegt.

Ein erfindungsgemäßes Verfahren zum Kalibrieren einer Einrichtung eines Fahrantriebes, der gemäß wenigstens einem Aspekt der vorhergehenden Beschreibung ausgestaltet ist, hat Schritte Ansteuern des Druckventils mit einem Ansteuerstrom gemäß einer stufenförmigen oder kontinuierlichen Rampenfunktion, Erfassen des Drucks in Abhängigkeit des Ansteuerstromes, Ermitteln des einem Limit des Drucks oder einem Abschneidedruck zugeordneten Ansteuerstromes, wenn der Druck das Limit erreicht, und Ablegen des Limits und des zugeordneten Ansteuerstroms und dadurch Kalibrierung der Abschneidung. Auf diese Weise ist ein automatischer Abgleich des Verhaltens der Hydropumpe im Fahrantrieb geschaffen, der eine hohe Drucksteuergenauigkeit gewährleistet.

Vorzugsweise erfolgt die Kalibrierung oder der Abgleich im Stillstand des Fahrantriebes.

In einer Weiterbildung ist die Kalibrierung von einem Fahrer oder Bediener initialisierbar. Alternativ oder ergänzend kann die Kalibrierung von einem Steuergerät des Fahrantriebes oder von der Einrichtung, insbesondere bei Erfassung eines vorbestimmten Ereignisses des Fahrantriebes, initialisiert werden.

In einer möglichen Ausgestaltung des Verfahrens wird zunächst das Limit explizit vorgegeben, indem es zu Beginn explizit in der Einrichtung abgelegt wird. Dann kann durch oben genanntes Erfassen des Drucks unmittelbar das Erreichen des Limits erfasst und der dann wirksame Ansteuerstrom zur Kalibrierung zugeordnet und abgelegt werden.

Alternativ oder ergänzend erfolgt der Schritt Ermitteln des dem Limit oder dem Abschneidedruck zugeordneten Ansteuerstroms in Abhängigkeit eines ermittelten charakteristischen Druckwertes des Fahrantriebes und eines Druckabstandes davon. Hierdurch kann die Kalibrierung relativ zum charakteristischen Druckwert, insbesondere einem Öffnungsdruck eines Druckbegrenzungsventils, erfolgen.

In einer Weiterbiodung weist das Verfahren daher Schritte Implizite Vorgabe des Limits als Druckversatz eines insbesondere stationären Öffnungsdrucks eines Druckbegrenzungsventils des Fahrantriebes, Ermitteln des Öffnungsdrucks aus einem Verlauf des erfassten Drucks (insbesondere aus einem zeitlichen Verlauf, insbesondere aus einem zeitlichen Gradienten des erfassten Drucks und einer Ventilcharakteristik), Ermitteln des Limits aus dem Öffnungsdruck und dem Druckversatz, und, insbesondere ausgehend vom Öffnungsdruck, ein Ansteuern des Druckventils mit dem Ansteuerstrom gemäß einer abfallenden Rampenfunktion bis zum Limit. Dadurch wird die Kalibrierung so durchgeführt, dass sie relativ zum Öffnungsdruck des Druckbegrenzungsventils erfolgt und somit eine Ausnutzung des zur Verfügung stehenden Drucks maximal ist. Auch kann in Zuge dessen die Einstellung des Druckbegrenzungsventils vermessen werden. Ein Abgleich aus Öffnungsdruck und eingestelltem Wert liefert dann Informationen zu einer ggf. notwenigen Korrektur der Einstellung oder Wartung des Druckbegrenzungsventils.

In einer Weiterbildung umfasst der Schritt Ermitteln des Öffnungsdrucks aus dem Verlauf des erfassten Drucks Schritte Ermitteln eines Öffnens des Druckbegrenzungsventils aus dem Verlauf des erfassten Drucks, und Beibehalten des beim Öffnen wirksamen Ansteuerstromes während einer Zeitdauer, in der sich der Druck zum Öffnungsdruck stabilisiert. Die Zeitdauer ist dabei insbesondere aus einer in der Steuereinheit abgelegten Ventilcharakteristik des Druckbegrenzungsventils bekannt.

Das genannte Limit kann beispielsweise der bereits erwähnte maximal zulässige Druck oder ein minimal notwendiger Druck, beispielsweise an einem Anfahrpunkt des Fahrantriebes, an dem dieser die Anfahrwiderstände überwindet und sich in Bewegung setzt, sein. Grundlegend ist es vorteilhaft, die Kalibrierung unter definierten Bedingungen durchzuführen. Hierzu weist eine Weiterbildung das Verfahren einen vorhergehenden Schritt Herstellen wenigstens einer Kalibrierbedingung auf. Dies ist beispielsweise das Erreichen und Halten einer im Fahrbetrieb relevanten Drehzahl der Hydropumpe (oder von deren Antriebsmaschine) und /oder dass eine Wellenleistung des Hydromotors gleich Null ist. Letztgenannte Kalibrierbedingung wird auch Blockbedingung genannt, da die Hydropumpe gegen einen Hydromotor fördert, der keine Wellenleistung abgeben kann. Dies wird über eine Feststellbremse und / oder durch ein Null-Hubvolumen des Hydromotos erreicht.

Die unter Blockbedingung ermittelte Kalibrierung aus Referenzwerten des Limits und zugeordnetem Ansteuerstrom kann in einer Weiterbildung genutzt werden, um Toleranzen der Hydropumpe außerhalb der Blockbedingung, insbesondere an einem Maximalleistungspunkt der Hydropumpe mit maximalem Hubvolumen und Nenndruck. Der Nenndruck ist dabei der unter Normalbedingungen vorgesehene Druck weit unter dem Limit, beispielsweise etwa 200bar.

Auch kann über die erfindungsgemäße Kalibrierung eine Hysterese der Druckabschneidung ermittelt und daraus ein Korrekturfaktor oder ein Offset ermittelt werden.

Vorzugsweise kann das Verfahren für einen Vorwärtsfahrbetrieb und / oder einen Rückwärtsfahrbetrieb durchgeführt werden.

Abgesehen von der Kalibrierung weist das Verfahren in einer Weiterbildung Schritte zum gesteuerten Limitieren des Drucks mittels Beeinflussung, insbesondere Steuern, des wenigstens einen Stelldrucks über die Einrichtung auf.

In einer Weiterbildung hat das Verfahren einen Schritt oder Schritte Ermitteln eines Zugbetriebes oder Bremsbetriebes des Fahrantriebes, und /oder Ermitteln einer Fahrtrichtung des Fahrantriebes, und / oder Auswählen von Kennlinie und / oder Kennfeld der Hydropumpe und / oder des Druckventils in Abhängigkeit des ermittelten Betriebes und / oder der ermittelten Fahrtrichtung, über die Einrichtung.

In einer Weiterbildung hat das Verfahren einen Schritt Ermitteln des maximal zulässigen Stelldrucks aus einer Kennlinie der Hydropumpe, in der der Stelldruck in Abhängigkeit eines Limits des Drucks und zumindest in Abhängigkeit eines Hubvolumens der Hydropumpe oder einer dieses Hubvolumen repräsentierenden Größe der Hydropumpe beschrieben ist, über die Einrichtung.

In einer Weiterbildung hat das Verfahren einen Schritt Ermitteln eines notwendigen Stelldrucks gemäß einer Geschwindigkeitsanforderung aus einem Kennfeld der Hydropumpe, in der der Stelldruck in Abhängigkeit des Drucks und zumindest in Abhängigkeit eines Hubvolumens der Hydropumpe oder einer dieses Hubvolumen repräsentierenden Größe der Hydropumpe beschrieben ist, über die Einrichtung.

In einer Weiterbildung hat das Verfahren Schritte Ermitteln eines kleineren aus notwendigem und maximal zulässigem Stelldruck, Ermitteln eines elektrischen Ansteuerstroms des Druckventils aus einer Ventilkennlinie des Druckventils, in der der elektrische Ansteuerstrom in Abhängigkeit des Stelldrucks beschrieben ist, gemäß dem ermittelten kleineren der Stelldrücke, und Ansteuern des Druckventils mit diesem Ansteuerstrom, über die Einrichtung.

Die genannten Schritte gelten vorzugsweise für den Pumpenbetrieb der Hydropumpe. In deren Motorbetrieb weist das Verfahren in einer Weiterbildung die gleichen Schritte bezüglich des zweiten Stelldrucks zur Beaufschlagung der zweiten Zylinderkammer auf.

In einer Weiterbildung des Fahrantriebs und / oder des Verfahrens ist eine variable Vorgabe des Drucks und / oder des Limits vorgesehen, sodass ein Drehmoment der Hydropumpe und / oder eine Leistung der Hydropumpe in Abhängigkeit von Faktoren, wie beispielsweise Fahrgeschwindigkeit, Temperatur oder anderem, steuerbar ist oder sind.

Im Motorbetrieb der Hydropumpe kann beim Reversieren über die erfindungsgemäße Druckabschneidung ein Ansprechen von Druckbegrenzungsventilen verhindert werden.

Die erfindungsgemäße Druckabschneidung erlaubt beim Reversieren und Verzögern eine Steuerung eines Bremsdrucks.

In einer Weiterbildung ist ein Abgleich der erfindungsgemäßen elektronischen Steuerung mit der realen Pumpenphysik möglich: So kann beispielsweise eine Einstellung der Hydropumpe an einem Prüfstand unter definierten Bedingungen erfolgen, können notwendige Ansteuersignale oder -ströme am Prüfstand unter definierten Bedingungen ermittelt werden und als Parameter an die Steuereinheit - insbesondere an deren Software - übermittelt werden, und ein automatischer Abgleich der Parameter kann in der Steuereinheit im Sinne einer Kalibrierfunktion erfolgen.

Die erfindungsgemäße Steuerung ist, insbesondere vorrichtungstechnisch und verfahrenstechnisch, einfach auf verschiedenste Bauarten und Nenngrößen von Hydropumpen übertragbar.

Vorzugsweise erfolgen die Schritte automatisiert, insbesondere von der Einrichtung gesteuert.

Ein Ausführungsbeispiel eines erfindungsgemäßen hydrostatischen Fahrantriebes, sowie ein Ausführungsbeispiel eines erfindungsgemäßen Verfahrens zur Kalibrierung von dessen Druckabschneidung, sind in den Zeichnungen dargestellt. Anhand der Figuren dieser Zeichnungen wird die Erfindung nun näher erläutert.

Es zeigen:
Figur 1 einen hydraulischen Schaltplan eines hydrostatischen Fahrantriebes, gemäß einem Ausführungsbeispiel,
Figur 2 ein theoretisches Zeitdiagramm eines Drucks und eines Ansteuerstromes gemäß einem Verfahren zur Kalibrierung, gemäß einem Ausführungsbeispiel, und
Figur 3 ein vermessenes Zeitdiagramm einer Antriebsdrehzahl, des Drucks und des Ansteuerstromes, gemäß dem Verfahren gemäß Figur 2.

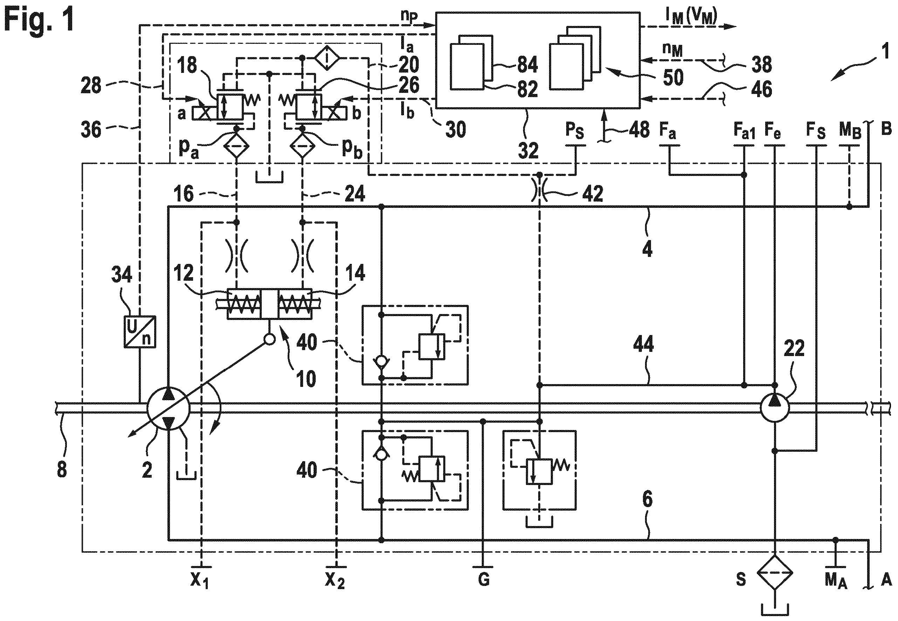

Gemäß Figur 1 hat ein hydrostatischer Fahrantrieb 1 eine Hydropumpe 2, die in geschlossenem hydraulischem Kreislauf über die Arbeitsleitungen 4 und 6 mit einem nicht dargestellten Hydromotor zu dessen Druckmittelversorgung fluidisch verbunden ist. Dabei ist die Hydropumpe 2 mit einer Antriebsmaschine (nicht dargestellt) über eine Triebwelle 8 zur Übertragung eines Drehmoments gekoppelt. Die Kopplung ist dabei nicht übersetzt, so dass die Drehzahl der Antriebsmaschine und der Hydropumpe 2 identisch sind. Die Hydropumpe 2 ist als Axialkolbenpumpe in Schrägscheibenbauweise ausgestaltet und kann in beiden Drehrichtungen und sowohl im Pumpen- als auch im Motorbetrieb betrieben werden. Sie hat ein verstellbares Verdrängungsvolumen V_{P} und eine als doppelt wirkender Hydrozylinder ausgestaltete Verstelleinrichtung 10. Der Hydrozylinder 10 hat eine erste Zylinderkammer 12 und eine, der ersten entgegenwirkende, zweite Zylinderkammer 14. Die erste Zylinderkammer 12 ist über eine erste Stelldruckleitung 16 mit dem Ausgang eines ersten Druckreduzierventils 18 verbunden. Letztgenanntes ist an eine Steuerdruckleitung 20 angeschlossen, die über einen Steuerdruckanschluss p_{S} und über eine Speisepumpe 22, die auf der gleichen Triebwelle 8, wie die Hydropumpe 2 sitzt, mit Steuerdruckmittel versorgbar ist. In gleicher Weise ist die zweite Zylinderkammer 14 über eine zweite Stelldruckleitung 24 mit einem zweiten Druckreduzierventil 26 verbunden, welches an die Steuerdruckleitung 20 angeschlossen ist. Die Druckreduzierventile 18, 26 sind elektromagnetisch betätigbar, wobei der jeweils in der Stelldruckleitung 16 bzw. 24 resultierende Stelldruck pₐ bzw. p_{b} gemäß einer Ventilkennlinie proportional zu einem Ansteuerstrom Iₐ bzw. I_{b} des Elektromagnets a bzw. b ist. Über die elektromagnetische Betätigung der Druckreduzierventile 18, 26 können somit über die Vorgabe der Ansteuerströme Iₐ, I_{b} die Stelldrücke pₐ, p_{b} der Zylinderkammern 12, 14 gesteuert werden. Zu diesem Zweck sind die Elektromagnete a, b der Druckreduzierventile 18, 26 über eine jeweilige Signalleitung 28 bzw. 30 mit einer elektronischen Steuereinheit 32 signalverbunden.

Des Weiteren hat der hydrostatische Fahrantrieb 1 eine Drehzahlerfassungseinheit 34, über die eine Drehzahl n_{P} der Hydropumpe 2 erfassbar und über eine Signalleitung 36 an die elektronische Steuereinheit 32 übermittelbar ist. Ebenso hat der Fahrantrieb 1 eine Drehzahlerfassungseinheit (nicht dargestellt), über die die Drehzahl n_{M} des Hydromotors erfassbar und über die Signalleitung 38 an die elektronische Steuereinheit 32 übermittelbar ist.

Zur sicherheitsrelevanten Druckabsicherung der Arbeitsleitungen 4, 6 gegen Überlast hat der hydrostatische Fahrantrieb 1 jeweils ein Druckbegrenzungsventil 40, das mit der jeweiligen Arbeitsleitung 4, 6 verbunden ist. Beide Druckbegrenzungsventile 40 sind mit ihren Ausgängen an eine Speisedruckleitung 44 angeschlossen, die mit der Speisepumpe 22 verbunden ist. Die Speisedruckleitung 44 ist über eine Drossel 42 mit der Steuerdruckleitung 20 fluidisch verbunden. Im Falle des Ansprechens der Druckbegrenzungsventile wird somit Druckmittel in die Speisedruckleitung 44 entspannt, wodurch energetischen Verluste geringer sind, als wenn die Entspannung zum Tank T hin geschähe. Die Druckbegrenzungsventile 40 weisen jeweils eine Speise- oder Nachsaugfunktion in Form eines Rückschlagventils auf.

Der hydrostatische Fahrantrieb 1 kann sowohl im Zugbetrieb als auch im Schlepp- oder Bremsbetrieb betrieben werden. Im Zugbetrieb arbeitet die Hydropumpe 2 im Pumpenbetrieb, im Bremsbetrieb arbeitet sie im Motorbetrieb. Zudem ist die Hydropumpe 2 reversierbar, das heißt ihr Verdrängungsvolumen V_{P} ist über die Verstelleinrichtung 10 beidseitig einer Neutralstellung mit Nullvolumen V_{P} = 0 verstellbar. Dadurch ist bei gleichbleibender Drehrichtung der Triebwelle 8 und der Antriebsmaschine (Dieselmotor) eine Fahrtrichtungsumkehr möglich.

Die elektronische Steuereinheit 32 ist über eine Signalleitung 46 mit einer Bedienerschnittstelle in Form eines Fahrpedals (nicht dargestellt) verbunden. Über das Fahrpedal wird dabei von einem Fahrer oder einer Fahrerin eine Geschwindigkeitsanforderung an die elektronische Steuereinheit 32 übermittelt. Diese kann sowohl die Rückwärtsfahrt als auch die Vorwärtsfahrt betreffen. Wird das Fahrpedal betätigt, so entspricht das dem Zug- oder Pumpenbetrieb der Hydropumpe 2, wird das Fahrpedal hingegen zurückgenommen, entspricht dies dem Brems- oder Motorbetrieb der Hydropumpe 2. Auch die Betätigung einer Fahrbremse (nicht dargestellt) entspricht dem Brems- oder Motorbetrieb der Hydropumpe 2. Die Steuereinheit ist derart ausgestaltet, dass sie anhand der genannten Betätigung den entsprechenden Betrieb ermitteln kann. Zur Auswahl einer Fahrtrichtung weist der hydrostatische Fahrantrieb 1 zudem einen betätigbaren Fahrtrichtungsschalter (nicht dargestellt) auf, der über eine Signalleitung 48 mit der elektronischen Steuereinheit 32 signalverbunden ist. In Abhängigkeit seiner Stellung erfolgt die Ansteuerung der Hydropumpe 2 in ihrem reversierten oder nicht reversierten Verstellbereich, also diesseits oder jenseits der Neutralstellung des Hubvolumens der Hydropumpe 2. Für die weitere Betrachtung seien folgende Fahrzustände definiert:
Vorwärtsfahrt, Zugbetrieb: Druckbeaufschlagung der ersten Zylinderkammer 12 über die erste Stelldruckleitung 16 und das erste Druckreduzierventil 18 mit dem erstem Stellruck pₐ durch Ansteuern des ersten Druckreduzierventils 18 mit dem Ansteuerstrom Iₐ über die Steuereinheit 32 über die erste Signalleitung 28.

Vorwärtsfahrt, Bremsbetrieb: Druckbeaufschlagung der zweiten Zylinderkammer 14 über die zweite Stelldruckleitung 24 und das zweite Druckreduzierventil 26 mit dem zweiten Stelldruck p_{b} durch Ansteuern des zweiten Druckreduzierventils 26 mit dem Ansteuerstrom I_{b} über die Steuereinheit 32 über die Signalleitung 30.

Rückwärtsfahrt, Zugbetrieb: Druckbeaufschlagung der zweiten Zylinderkammer 14 über die Kette 24, 26, 30, 32.

Rückwärtsfahrt, Bremsbetrieb: Druckbeaufschlagung der ersten Zylinderkammer 12 über die Kette 16, 18, 28, 32.

Im gezeigten Ausführungsbeispiel des hydrostatischen Fahrantriebes 1 ist die Hydropumpe 2 derart ausgestaltet, dass der Druck p, der in der hochdruckführenden der Arbeitsleitungen 4, 6 ansteht, dem dann wirksamen Stelldruck pₐ oder p_{b} entgegenwirkt und in Richtung seiner eigenen Verringerung wirksam ist. Hierzu weist die Hydropumpe 2 eine konstruktiv realisierte Regelschleife auf. Im vorliegenden Fall der als Axialkolbenpumpe in Schrägscheibenbauweise ausgestalteten Hydropumpe 2 ist dies so realisiert, dass eine Steuerscheibe der Hydropumpe 2 bezüglich einer Drehachse ihrer Zylindertrommel verdrillt angeordnet ist. Mündungen derjenigen Zylinder, die mit der den Druck (Hochdruck) aufweisenden Druckniere Steuerscheibe verbunden sind, sind dadurch bezüglich einer Schwenkachse der Schrägscheibe unsymmetrisch verteilt angeordnet. Ebenso unsymmetrisch verteilt sind dann die an der Schrägscheibe abgestützten Endabschnitte der in den Zylindern geführten Arbeitskolben. Aus den somit unsymmetrisch wirkenden Stützkräften der Arbeitskolben resultiert an der Schrägscheibe ein im Pumpenbetrieb rückschwenkendes und im Motorbetrieb ausschwenkendes Moment. In der Konsequenz entsteht ein Zusammenhang in Form einer Pumpenkennlinie oder eines Kennfeldes von Pumpenkennlinien der Hydropumpe 2, in dem der jeweilige Stelldruck pₐ, p_{b} in Abhängigkeit des Drucks p und des Hubvolumens V_{P} der Hydropumpe 2, sowie von deren Drehzahl np beschreibbar ist. Diese Kennlinien oder Kennfelder sind vermessen und in der elektronischen Steuereinheit 32 zur Verarbeitung, insbesondere zur Ausführung des später beschriebenen Verfahrens, abgelegt.

Es folgt die Beschreibung eines normalen Fahrbetriebes des hydrostatischen Fahrantriebes 1. Ausgangspunkt der Beschreibung sei ein unbetätigtes Gas- oder Fahrpedal und eine im Leerlauf bei Leerlaufdrehzahl drehende Antriebsmaschine. Es erfolgt zunächst eine Betätigung des Fahrpedals durch den Bediener, wodurch die Drehzahl der Antriebsmaschine (Diesel) von Leerlauf auf Nenndrehzahl erhöht wird. Dementsprechend erfolgt über die elektronische Steuereinheit 32 in Abhängigkeit der Drehzahl des Dieselmotors ein Ansteuersignal oder Ansteuerstrom Iₐ für die Hydropumpe 2, genauer gesagt für deren erstes Druckreduzierventil 18. Mit Erreichen der Nenndrehzahl der Antriebsmaschine wird eine maximale Fahrgeschwindigkeit des Fahrantriebs 1 erhalten. Demgemäß wird der erste Stelldruck pₐ gemäß einem in der elektronischen Steuereinheit 32 abgelegten Kennfeld der Hydropumpe 2 erhöht. Da noch keine Last wirkt, schwenkt die Hydropumpe 2 voll auf ihr maximales Hubvolumen V_{Pmax} aus und liefert bei Nenndrehzahl ihren maximalen Volumenstrom Qₘₐₓ.

Durch auftretende Fahrwiderstände stellt sich beim Fahren in einer Ebene ein Druck oder Lastdruck p, beispielsweise 250 bar, ein. Es wird dann ein Betriebspunkt erreicht, der auf einer Kurve maximaler Leistung P_{nomeng} der Antriebsmaschine liegt. An diesem Betriebspunkt ist der erste Stelldruck pₐ bei der Nenndrehzahl so bemessen, dass die hydraulische Leistung pQₘₐₓ der Hydropumpe 2 der Nennleistung P_{nomeng} entspricht.

Nimmt nun, beispielsweise bei einer Bergfahrt oder bei einer Kiesaufnahme im Falle eines Radladers, die Last am Fahrantrieb 1 zu, so erhöht sich der Druck p. Aufgrund der vorgenannten Ausgestaltung der Hydropumpe 2, bei der im Zugbetrieb der Hydropumpe 2 in Vorwärtsfahrt der Arbeitsdruck p dem ersten Stelldruck pₐ in Richtung einer Verringerung des Hubvolumens V_{P} entgegenwirkt, schwenkt der Druck p die Schwenkwiege der Hydropumpe 2 zurück, wodurch sich die Fahrt verlangsamt. Der erste Stelldruck pₐ wird währenddessen nicht verändert, wodurch bei weiterer Erhöhung des Drucks p oder einer Druckdifferenz Δp die weitere Verringerung des Hubvolumens V_{P} folgt.

Mit Erreichen eines maximal zulässigen Drucks pₘₐₓ oder Abschneidedrucks, bzw. einer maximal zulässigen Druckdifferenz Δpₘₐₓ sorgt die elektronische Steuereinheit 32 dafür, dass dieses Limit pₘₐₓ, Δpₘₐₓ nicht überschritten wird. Demgemäß erfolgt trotz weiter zunehmender Last keine weitere Erhöhung des Drucks p, da der erste Stelldruck pₐ über die Steuereinheit 32 über das Druckreduzierventil 18 gemäß Figur 1 derart abgesenkt wird, dass der Druck pₘₐₓ nicht überschritten wird. Ist also beispielsweise in der Steuereinheit 32 ein maximal zulässiger Druck pₘₐₓ von beispielsweise 450bar eingestellt, so greift die Steuereinheit 32 gemäß erfindungsgemäß steuernder Druckabschneidung ein und nimmt den ersten Stelldruck pₐ zurück. Dadurch kann auch bei weiter steigender Last eine Überschreitung des maximal zulässigen Drucks pₘₐₓ verhindert werden.

Als Eingangsgrößen eines erfindungsgemäßen Verfahrens sind zumindest zu nennen: Ein zum Hubvolumen V_{P} proportionaler Schwenkwinkel a_{P} der Hydropumpe 2, deren Drehzahl np , welche in den Ausführungsbeispielen gleich oder proportional zur Drehzahl n_{eng} der Antriebsmaschine ist, und das zu definierende oder vorbestimmte Limit pₘₐₓ des maximal zulässigen Arbeitsdrucks, also des sogenannten Abschneidedrucks.

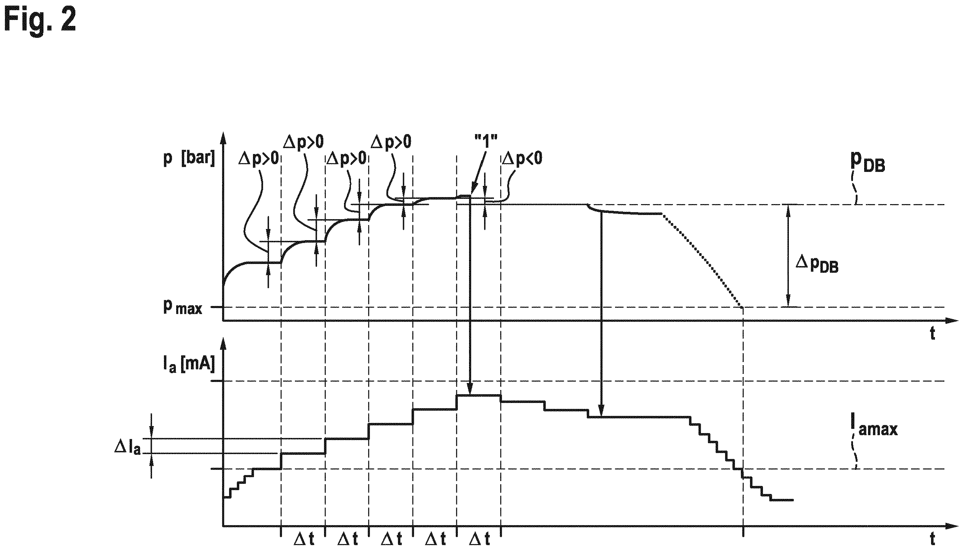

Figur 2 zeigt ein Zeitdiagramm eines Druckverlaufs p(t) und Ansteuerstromverlaufs Iₐ(t) eines Ausführungsbeispiels eines erfindungsgemäßen Verfahrens. Es sind wenigstens zwei Ausführungsbeispiele eines Verfahrens zu nennen. Beiden ist gemein, dass zunächst Kalibrierbedingungen hergestellt werden. Dies erfolgt einerseits, indem eine Pumpendrehzahl n_{P} auf einen im Fahrbetrieb relevanten Wert gefahren oder gestellt wird. Diese entspricht insbesondere beispielsweise der Nenndrehzahl n_{eng} der Antriebsmaschine. Hinzu kommt, dass die Hydropumpe 2 unter sogenannter Blockbedingung gefahren wird. Dies bedeutet, dass der Hydromotor, der von ihr mit Druckmittel versorgt wird, entweder auf ein Schluckvolumen V_{N} gleich Null gestellt ist oder, im Falle eines als Konstantmaschine ausgestalteten Hydromotors, von einer Bremse festgestellt ist. In beiden Fällen ist die Wellenleistung des Hydromotors Null und die Hydropumpe 2 erzeugt durch ihre Pumpenleistung lediglich Leckage im hydraulischen Kreis.

Im nächsten Schritt erfolgt ein kontinuierliches Anheben des Ansteuerstromes Iₐ über eine Rampe, die kontinuierlich oder schrittweise ausgestaltet ist. Auf diese Weise nähert man sich dem Limit pₘᵢₙ oder pₘₐₓ, für das der zugeordnete Ansteuerstrom Iₐₘₐₓ im Sinne einer Kalibrierung zu ermitteln ist, an. An dieser Stelle teilen sich nun die beiden Ausführungsbeispiele in unterschiedliche Zweige.

Gemäß einem ersten Ausführungsbeispiel des Verfahrens wird das Anheben des Ansteuerstromes Iₐ soweit fortgeführt, bis das zuvor explizit definierte Limit, bzw. der zuvor explizit definierte Abschneidedruck pₘᵢₙ oder pₘₐₓ, erreicht und erfasst wird. Der dann zu diesem Zeitpunkt vorgegebene Ansteuerstrom Iₐ wird dann als Referenzwert für die Pumpensteuerung in der Einrichtung 32 gespeichert. Mit diesem Referenzwert sind dann Toleranzen der Hydropumpe 2 und des Druckreduzierventils 18 ausgeglichen. Diese Schritte werden analog zu den genannten Schritten, die den Zugbetrieb in Vorwärtsfahrt repräsentieren, auch für den Zugbetrieb in Rückwärtsfahrt durchgeführt.

Das zweite Ausführungsbeispiel des Verfahrens geht nicht den Weg über die Erkennung des Druckabschneidepunktes (explizit vorgegebenes Limit), sondern nutzt die Funktion des Druckbegrenzungsventils 40. Nach den beiden mit dem ersten Ausführungsbeispiel identischen Schritten Kalibrierbedingungen schaffen und kontinuierliches Anheben der Pumpenansteuerung, erfolgt die Anhebung des Ansteuerstroms Iₐ gemäß Figur 2, bis ein Öffnen des Druckbegrenzungsventils 40 gemäß Figur 1 am Punkt "1" messbar ist. Hierzu wird über die Steuereinheit 32 der Druck p gemäß Figur 2 Diagramm oben erfasst, der sich aufgrund der stufenweisen Anhebung des Ansteuerstromes Iₐ gemäß Figur 2 unten immer weiter erhöht. Solange ein Gradient Δp/Δt positiv ist, hat das Druckbegrenzungsventil 40 noch nicht geöffnet. Erkennt die Steuereinheit 32 einen negativen Gradienten Δp/Δt, so ist ein Öffnungspunkt "1" des Druckbegrenzungsventils 40 erfasst. Ab dem Öffnungspunkt "1" zeigt das Druckbegrenzungsventil 40 ein Verhalten in Form eines charakteristischen Abfallens des Druckes p. Jenseits des Öffnungspunktes "1" stabilisiert sich dann der Druck p gemäß Figur 2 oben in einem Plateau, das als Öffnungsdruck p_{DB} des Druckbegrenzungsventils 40 erfasst wird und in der Steuereinheit 32 abgelegt wird.

Es folgt ein stufenweises Absenken des Ansteuerstromes Iₐ gemäß Figur 2 unten, bis ausgehend vom Öffnungsdruck p_{DB} der Druck p auf das aus dem Druckabstand Δp_{DB} errechnete Limit pₘₐₓ abgesunken ist. Der dann in Figur 2 von der Steuereinheit 32 angelegte Ansteuerstrom Iₐₘₐₓ wird zusammen mit dem Limit pₘₐₓ in der Steuereinheit 32 gespeichert, wodurch Toleranzen der Hydropumpe 2 und des Druckreduzierventils abgeglichen sind.

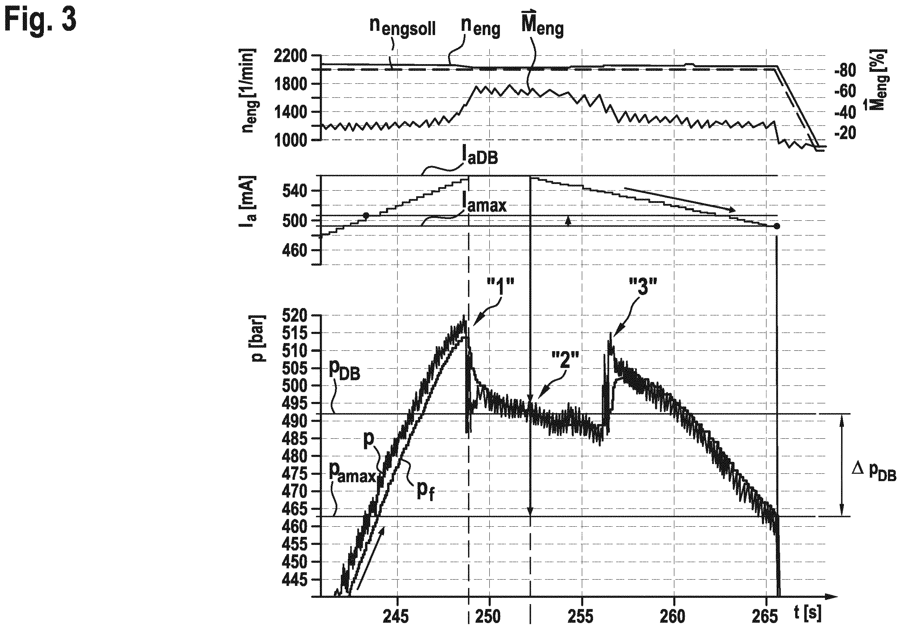

Figur 3 zeigt real vermessene Zeitverläufe des Ansteuerstromes Iₐ, des Druckes p, des gefilterten Druckes p_{f}, der Antriebsdrehzahl n_{eng} als Soll- und Istwert, sowie des Antriebsmomentes M_{eng}. Dargestellt ist das zweite Ausführungsbeispiel des Verfahrens mit dem Erkennen eines Öffnungspunktes "1", sowie eines Druckbegrenzungspunktes "2", an dem der Druck p(p_{f}) sich nach dem Öffnen stationär verhält. Gemäß Figur 3 oben wird eine Solldrehzahl n_{engsoll} der Antriebsmaschine auf 2000 Umdrehungen vorgegeben und eingeregelt. Der Istwert ist n_{eng}. Gemäß Figur 3 Mitte wird der Ansteuerstrom Iₐ stufenweise erhöht. Demgemäß folgen der Druck p und der gefilterte Druck p_{f} gemäß Figur 3 unten. Beim Öffnungspunkt"1" fallen der Druck p und der gefilterte Druck p_{f} rapide ab. Dies wird von der Steuereinheit 32 erfasst und als Öffnungspunkt"1" erkannt. In der Steuereinheit 32 ist eine Charakteristik des Druckbegrenzungsventils 40 hinterlegt, aus der der Druckverlauf des Druckbegrenzungsventils 40 in Abhängigkeit der Zeit t nach dem Öffnungspunkt "1" bekannt ist. Die Steuereinheit 32 reagiert daher ab dem Öffnungspunkt "1" mit dem Konstanthalten des Ansteuerstromes Iₐ, so dass sich der Druck p oder p_{f} stabilisieren kann. Dies ist gegeben, wenn der Gradient Δp (insbesondere Δp_{f})/Δt gleich Null ist, was in Figur 3 unten beim sogenannten Druckbegrenzungspunkt "2" der Fall ist. Der Druck p_{DB} und der zugehörige Strom I_{aDB} werden in der Steuereinheit 32 abgelegt. Über das in der Steuereinheit 32 zuvor abgelegte Offset, bzw. den Druckabstand Δp_{DB}, kann somit unmittelbar das Limit pₐₘₐₓ errechnet werden. Im Anschluss an das Plateau des Ansteuerstromes I_{aDB} erfolgt über die Steuereinheit 32 nun das Ansteuern des Druckreduzierventils 18 mit einem Ansteuerstrom Iₐ mit stufenweise abfallender Rampenfunktion. Auffällig ist ein erneuter Anstieg des Drucks beim Schließen des Druckbegrenzungsventils 40. Hierauf erfolgt ein erneutes Absinken des Drucks p, p_{f} bis der Druck p, p_{f} das zuvor errechnete Limit pₐₘₐₓ erreicht. Das Wertepaar aus pₐₘₐₓ und zugeordnetem Iₐₘₐₓ wird in der Steuereinheit 32 gespeichert. Damit sind die Toleranzen der Hydropumpe 2 und des Druckreduzierventils 18 abgeglichen.

Offenbart ist ein hydrostatischer Fahrantrieb mit einer Hydropumpe mit verstellbarem Hubvolumen, wobei die Verstellung mittels einem proportional zu einem Ansteuerstrom bereitgestellten Stelldruck erfolgt, über die ein Hydromotor mit Druckmittel versorgbar ist. Erfindungsgemäß sind eine Drucklimitierung oder -abschneidung auf Basis einer gesteuerten Limitierung des Stelldrucks, sowie eine automatisierte Kalibrierung der Druckabschneidung, über eine elektronische Steuereinheit des Fahrantriebes vorgesehen.

Offenbart ist weiterhin ein Verfahren zur Kalibrierung der genannten Druckabschneidung über die Einrichtung, mit Schritten Fahren einer Rampe des Ansteuerstromes, Erfassen des Drucks am Limit und des zugeordneten Ansteuerstromes, sowie Ablegen dieses Wertepaares in der Einrichtung.

## Patentansprüche

1. Hydrostatischer Fahrantrieb mit einer Hydropumpe (2), die mit einer Antriebsmaschine koppelbar ist, zur Druckmittelversorgung eines mit einem Abtrieb (80) koppelbaren Hydromotors des Fahrantriebes (1), wobei die Hydropumpe (2) einen Stellzylinder (10) mit wenigstens einem Zylinderraum (12, 14) und ein darüber verstellbares Hubvolumen (V_{P}) hat und wenigstens ein elektrisch ansteuerbares Druckventil (18, 26) vorgesehen ist, über das der Zylinderraum (12, 14) mit einem verstellend wirksamen Stelldruck (pₐ, p_{b}) beaufschlagbar ist, und mit einer Einrichtung (32), über die ein Druck (p) der Hydropumpe (2) mittels Beeinflussung des Stelldrucks (pₐ, p_{b}) limitierbar ist, **dadurch gekennzeichnet, dass** die Einrichtung derart ausgestaltet ist, dass über sie der Druck (p) gesteuert limitierbar und diese gesteuerte Limitierung kalibrierbar ist.

2. Fahrantrieb nach Anspruch 1, wobei die Einrichtung eine elektronische Steuereinheit (32) ist.

3. Fahrantrieb nach Anspruch 1 oder 2, wobei die Einrichtung (32) eine Kennlinie (82, 84) der Hydropumpe (2) hat, in der der Stelldruck (pₐ, p_{b}) in Abhängigkeit vom Limit (pₘₐₓ) des Drucks (p) und zumindest vom Hubvolumen (V_{P}) der Hydropumpe (2) oder einer dieses Hubvolumen (V_{P}) repräsentierenden Größe (α_{P}) der Hydropumpe (2) beschrieben ist.

4. Fahrantrieb nach einem der Ansprüche 1 bis 3, wobei die Einrichtung (32) ein Kennfeld (50) der Hydropumpe (2) hat, in der der Stelldruck (pₐ, p_{b}) in Abhängigkeit des Drucks (p) und zumindest des Hubvolumens (V_{P}) der Hydropumpe (2) oder einer dieses Hubvolumen (V_{P}) repräsentierenden Größe (ap) der Hydropumpe (2) beschrieben ist.

5. Fahrantrieb nach Anspruch 3 und / oder 4, wobei in der Kennlinie (82, 84) und / oder dem Kennfeld (50) der Stelldruck (pₐ, p_{b}) in Abhängigkeit einer Drehzahl (n_{P}) der Hydropumpe (2) beschrieben ist.

6. Fahrantrieb zumindest nach Anspruch 3, wobei über die Einrichtung (32) aus der Kennlinie (82, 84) ein maximal zulässiger Stelldruck (pₐₘₐₓ, p_{bmax}) ermittelbar ist.

7. Fahrantrieb zumindest nach Anspruch 4, wobei über die Einrichtung (32) aus dem Kennfeld (50) ein gemäß einer Geschwindigkeitsanforderung notwendiger Stelldruck ermittelbar ist.

8. Fahrantrieb nach einem der vorhergehenden Ansprüche, wobei die Einrichtung eine Ventilkennlinie des Druckventils (18, 26) hat, in der ein elektrischer Ansteuerstrom (Iₐ, I_{b}) in Abhängigkeit des Stelldrucks (pₐ, p_{b}) beschrieben ist.

9. Verfahren zum Kalibrieren einer Einrichtung eines Fahrantriebes (1), der gemäß einem der vorhergehenden Ansprüche ausgestaltet ist, **gekennzeichnet durch** Schritte
- Ansteuern des Druckventils (18) mit einem Ansteuerstrom (Iₐ) gemäß einer Rampenfunktion,
- Erfassen des Drucks (p) in Abhängigkeit des Ansteuerstromes (Iₐ),
- Ermitteln des einem Limit (pₘₐₓ) des Drucks (p) zugeordneten Ansteuerstromes (Iₐₘₐₓ), wenn der Druck (p) das Limit (pₘₐₓ) erreicht, und
- Ablegen des Limits (pₘₐₓ) und des zugeordneten Ansteuerstroms (Iₐₘₐₓ).

10. Verfahren nach Anspruch 9, mit einem Schritt
- Explizite Vorgabe des Limits (pmax).

11. Verfahren nach Anspruch 9, mit Schritten
- Implizite Vorgabe des Limits (pₘₐₓ) als Druckversatz (Δp_{DB}) eines Öffnungsdrucks (p_{DB}) eines Druckbegrenzungsventils (40) des Fahrantriebes (1),
- Ermitteln des Öffnungsdrucks (p_{DB}) aus einem Verlauf des erfassten Drucks (p),
- Ermitteln des Limits (pₘₐₓ) aus Öffnungsdruck (p_{DB}) und Druckversatz (Δp_{DB}), und
- Ansteuern des Druckventils (18) mit dem Ansteuerstrom (Iₐ) gemäß einer abfallenden Rampenfunktion, bis zum Limit (pₘₐₓ).

12. Verfahren nach Anspruch 11, wobei der Schritt Ermitteln des Öffnungsdrucks (p_{DB}) aus dem Verlauf des erfassten Drucks (p) Schritte
- Ermitteln eines Öffnens des Druckbegrenzungsventils (40) aus dem Verlauf des erfassten Drucks (p), und
- Beibehalten des beim Öffnen wirksamen Ansteuerstromes (Iₐ) während einer Zeitdauer (t_{DB}), in der sich der Druck (p) zum Öffnungsdruck (p_{DB}) stabilisiert aufweist.

13. Verfahren nach Anspruch 11 oder 12, mit einem Schritt
- Abgleichen des Öffnungsdrucks (p_{DB}) gegen einen am Druckbegrenzungsventil (40) eingestellten Öffnungsdruck (P_{DBsoll}).

14. Verfahren nach einem der Ansprüche 9 bis 13, wobei das Limit ein maximal zulässiger Druck (pₘₐₓ) oder ein minimal notwendiger Druck (pₘᵢₙ) eines Fahrbetriebes des Fahrantriebes (1) ist.

15. Verfahren nach einem der Ansprüche 9 bis 14 mit einem vorhergehenden Schritt
- Herstellen wenigstens einer Kalibrierbedingung.

## Claims

1. Hydrostatic traction drive having a hydraulic pump (2) which is couplable to a drive machine and which serves for the supply of pressure medium to a hydraulic motor, which is couplable to an output (80), of the traction drive (1), wherein the hydraulic pump (2) has a control cylinder (10) with at least one cylinder chamber (12, 14) and has a swept volume (V_{P}) adjustable by means of said control cylinder, and at least one electrically actuatable pressure valve (18, 26) is provided, by means of which the cylinder chamber (12, 14) can be charged with a control pressure (pₐ, p_{b}) which has an adjusting action, and having a device (32) by means of which a pressure (p) of the hydraulic pump (2) can be limited through influencing of the control pressure (pₐ, p_{b}), **characterized in that** the device is configured such that, by means thereof, the pressure (p) can be limited in controlled fashion, and said controlled limitation is calibratable.

2. Traction drive according to Claim 1, wherein the device is an electronic control unit (32).

3. Traction drive according to Claim 1 or 2, wherein the device (32) has a characteristic curve (82, 84) of the hydraulic pump (2), in which characteristic curve the control pressure (pₐ, p_{b}) is described as a function of the limit (pₘₐₓ) of the pressure (p) and at least of the swept volume (V_{P}) of the hydraulic pump (2) or of a variable (α_{P}), which represents said swept volume (V_{P}), of the hydraulic pump (2).

4. Traction drive according to any of Claims 1 to 3, wherein the device (32) has a characteristic map (50) of the hydraulic pump (2), in which characteristic map the control pressure (pₐ, p_{b}) is described as a function of the pressure (p) and at least of the swept volume (V_{P}) of the hydraulic pump (2) or of a variable (α_{P}), which represents said swept volume (V_{P}), of the hydraulic pump (2).

5. Traction drive according to Claim 3 and/or 4, wherein, in the characteristic curve (82, 84) and/or the characteristic map (50), the control pressure (pₐ, p_{b}) is described as a function of a rotational speed (n_{P}) of the hydraulic pump (2).

6. Traction drive at least according to Claim 3, wherein a maximum admissible control pressure (pₐₘₐₓ, p_{bmax}) is ascertainable by means of the device (32) from the characteristic curve (82, 84).

7. Traction drive at least according to Claim 4, wherein a control pressure required in accordance with a speed demand is ascertainable by means of the device (32) from the characteristic map (50).

8. Traction drive according to any of the preceding claims, wherein the device has a valve characteristic curve of the pressure valve (18, 26), in which valve characteristic curve an electrical actuation current (Iₐ, I_{b}) is described as a function of the control pressure (pₐ, p_{b}).

9. Method for calibrating a device of a traction drive (1) which is configured according to any of the preceding claims, **characterized by** steps
- activating the pressure valve (18) with an actuation current (Iₐ) in accordance with a ramp function,
- detecting the pressure (p) as a function of the actuation current (Iₐ),
- ascertaining the actuation current (Iₐₘₐₓ) associated with a limit (pₘₐₓ) of the pressure (p) if the pressure (p) reaches the limit (pₘₐₓ), and
- storing the limit (pₘₐₓ) and the associated actuation current (Iₐₘₐₓ).

10. Method according to Claim 9, having a step
- explicitly specifying the limit (pₘₐₓ) .

11. Method according to Claim 9, having steps
- implicitly specifying the limit (pₘₐₓ) as a pressure offset (Δp_{DB}) of an opening pressure (p_{DB}) of a pressure limiting valve (40) of the traction drive (1),
- ascertaining the opening pressure (p_{DB}) from a course of the detected pressure (p),
- ascertaining the limit (pₘₐₓ) from opening pressure (p_{DB}) and pressure offset (Δp_{DB}), and
- actuating the pressure valve (18) with the actuation current (Iₐ) in accordance with a falling ramp function, until the limit (pₘₐₓ) is reached.

12. Method according to Claim 11, wherein the step of ascertaining the opening pressure (p_{DB}) from the course of the detected pressure (p) has steps
- ascertaining an opening of the pressure limiting valve (40) from the course of the detected pressure (p), and
- maintaining the actuation current (Iₐ) effective upon the opening, for a period of time (t_{DB}) in which the pressure (p) stabilizes to the opening pressure (p_{DB}) .

13. Method according to Claim 11 or 12, having a step
- aligning the opening pressure (p_{DB}) with an opening pressure (p_{DSsoll}) set at the pressure limiting valve (40) .

14. Method according to any of Claims 9 to 13, wherein the limit is a maximum admissible pressure (pₘₐₓ) or a minimum required pressure (pₘᵢₙ) of a traction operating mode of the traction drive (1).

15. Method according to any of Claims 9 to 14, with a preceding step
- establishing at least one calibration condition.

## Revendications

1. Système d'entraînement hydrostatique comportant une pompe hydraulique (2) qui peut être accouplée à un moteur d'entraînement pour l'alimentation en fluide sous pression d'un moteur hydraulique, pouvant être accouplé à une sortie (80), du système d'entraînement (1), dans lequel la pompe hydraulique (2) présente un cylindre de réglage (10) doté d'au moins une chambre de cylindre (12, 14) et une cylindrée (V_{P}) pouvant être réglée par le biais de ce cylindre de réglage, et au moins une soupape de pression (18, 26) pouvant être commandée électriquement est prévue, par le biais de laquelle la chambre de cylindre (12, 14) peut être soumise à une pression de réglage (pₐ, p_{b}) agissant de manière à effectuer un réglage, et comportant un dispositif (32) par le biais duquel une pression (p) de la pompe hydraulique (2) peut être limitée en influençant la pression de réglage (pₐ, p_{b}), **caractérisé en ce que** le dispositif est configuré de telle sorte que la pression (p) peut être limitée de manière commandée par le biais de celui-ci et cette limitation commandée peut être étalonnée.

2. Système d'entraînement selon la revendication 1, dans lequel le dispositif est une unité de commande électronique (32).

3. Système d'entraînement selon la revendication 1 ou 2, dans lequel le dispositif (32) présente une courbe caractéristique (82, 84) de la pompe hydraulique (2), dans laquelle la pression de réglage (pₐ, p_{b}) est décrite en fonction de la limite (pₘₐₓ) de la pression (p) et au moins de la cylindrée (V_{P}) de la pompe hydraulique (2) ou d'une grandeur (α_{P}) de la pompe hydraulique (2) représentant cette cylindrée (V_{P}).

4. Système d'entraînement selon l'une des revendications 1 à 3, dans lequel le dispositif (32) présente une cartographie (50) de la pompe hydraulique (2), dans laquelle la pression de réglage (pₐ, p_{b}) est décrite en fonction de la pression (p) et au moins de la cylindrée (V_{P}) de la pompe hydraulique (2) ou d'une grandeur (α_{P}) de la pompe hydraulique (2) représentant cette cylindrée (V_{P}).

5. Système d'entraînement selon la revendication 3 et/ou 4, dans lequel la pression de réglage (pₐ, p_{b}) est décrite en fonction d'un régime (n_{P}) de la pompe hydraulique (2) dans la courbe caractéristique (82, 84) et/ou la cartographie (50).

6. Système d'entraînement au moins selon la revendication 3, dans lequel une pression de réglage maximale admissible (pₐₘₐₓ, P_{bmax}) peut être déterminée par le biais du dispositif (32) à partir de la courbe caractéristique (82, 84).

7. Système d'entraînement au moins selon la revendication 4, dans lequel une pression de réglage nécessaire conformément à une demande de vitesse peut être déterminée par le biais du dispositif (32) à partir de la cartographie (50).

8. Système d'entraînement selon l'une des revendications précédentes, dans lequel le dispositif présente une courbe caractéristique de la soupape de pression (18, 26), dans laquelle un courant de commande électrique (Iₐ, I_{b}) est décrit en fonction de la pression de réglage (pₐ, p_{b}).

9. Procédé d'étalonnage d'un dispositif d'un système d'entraînement (1) qui est configuré selon l'une des revendications précédentes, **caractérisé par** les étapes de
- commande de la soupape de pression (18) avec un courant de commande (Iₐ) conformément à une fonction de rampe,
- détection de la pression (p) en fonction du courant de commande (Iₐ),
- détermination du courant de commande (Iₐₘₐₓ) associé à une limite (pₘₐₓ) de la pression (p) lorsque la pression (p) dépasse la limite (pₘₐₓ), et
- mémorisation de la limite (pₘₐₓ) et du courant de commande associé (Iₐₘₐₓ).

10. Procédé selon la revendication 9, comportant une étape de
- spécification explicite de la limite (pₘₐₓ).

11. Procédé selon la revendication 9, comportant les étapes de
- spécification implicite de la limite (pₘₐₓ) comme un décalage de pression (Δp_{DB}) d'une pression d'ouverture (p_{DB}) d'une soupape de limitation de pression (40) du système d'entraînement (1),
- détermination de la pression d'ouverture (p_{DB}) à partir d'un profil de la pression détectée (p),
- détermination de la limite (pₘₐₓ) à partir de la pression d'ouverture (p_{DB}) et du décalage de pression (Δp_{DB}), et
- commande de la soupape de pression (18) avec le courant de commande (Iₐ) conformément à une fonction de rampe décroissante, jusqu'à la limite (pₘₐₓ).

12. Procédé selon la revendication 11, dans lequel l'étape de détermination de la pression d'ouverture (p_{DB}) à partir du profil de la pression détectée (p) comporte les étapes de
- détermination d'une ouverture de la soupape de limitation de pression (40) à partir du profil de la pression détectée (p), et
- maintien du courant de commande (Iₐ) effectif lors de l'ouverture pendant une durée (t_{DB}) pendant laquelle la pression (p) se stabilise jusqu'à la pression d'ouverture (p_{DB}) .

13. Procédé selon la revendication 11 ou 12, comportant une étape de
- comparaison de la pression d'ouverture (p_{DB}) avec une pression d'ouverture (P_{DBsoll}) réglée au niveau de la soupape de limitation de pression (40).

14. Procédé selon l'une des revendications 9 à 13, dans lequel la limite est une pression maximale admissible (pₘₐₓ) ou une pression nécessaire minimale (pₘᵢₙ) d'un mode de conduite du système d'entraînement (1).

15. Procédé selon l'une des revendications 9 à 14 comportant une étape précédente de
- réalisation d'au moins une condition d'étalonnage.
